# EUROPÄISCHE PATENTSCHRIFT

(11) **EP 2 054 258 B1**
(45) Veröffentlichungstag und Bekanntmachung des Hinweises auf die Patenterteilung: **19.04.2017**
(21) Anmeldenummer: 07801662.3
(22) Anmeldetag: 15.08.2007
(51) Int. Cl.: B60N 2/02

(54) **BETÄTIGUNGSVORRICHTUNG FÜR EINEN SITZ, INSBESONDERE EINEN KRAFTFAHRZEUGSITZ**
ACTUATOR FOR A SEAT, PARTICULARLY A MOTOR VEHICLE SEAT
DISPOSITIF D'ACTIONNEMENT D'UN SIÈGE, NOTAMMENT D'UN SIÈGE DE VÉHICULE

(30) Priorität: 17.08.2006 DE 102006038649; 08.12.2006 DE 102006058388
(43) Veröffentlichungstag der Anmeldung: 06.05.2009
(73) Patentinhaber: Johnson Controls GmbH, 51399 Burscheid (DE)
(72) Erfinder: SIMEONIDIS, Antonios, 42287 Wuppertal (DE); WEHLING, Karsten, 51399 Burscheid (DE); FISSLER, Leonid, 51381 Leverkusen (DE); MANTKE, Jörg, 51381 Leverkusen (DE)
(74) Vertreter: Wolff, Felix
(86) Internationale Anmeldenummer: PCT/EP2007/007198
(87) Internationale Veröffentlichungsnummer: WO 2008/019835

(56) Entgegenhaltungen:
- EP-A- 1 352 779
- JP-A- 11 105 606

## Beschreibung

Die Erfindung betrifft eine Betätigungsvorrichtung für ein Fahrzeug mit einem Basisteil, einer Blende einem Griffstück und einem Bowdenzug, wobei der Bowdenzug ein Endfitting aufweist.

Solche Betätigungsvorrichtungen sind allgemein bekannt. So beschreibt die europäische Patentschrift EP 1 352 779 A1 beispielsweise eine Betätigungsvorrichtung für einen Fahrzeugsitz mit einem Griffstück, das einen Zug bewegt. Die Betätigungsvorrichtung wird dabei so an dem Fahrzeugsitz befestigt, dass ein Sitzbezug zwischen zwei Blenden eingeklemmt wird. Hierfür weisen beide Blenden Befestigungsmittel auf, die in den Sitzbezug eingreifen. Nachteilig bei der Betätigungsvorrichtung ist jedoch, dass bei der Montage der Zug umständlich mit dem Griffstück verbunden werden muss. Des Weiteren besteht bei der beschriebenen Betätigungsvorrichtung die Gefahr, dass der Sitzbezug durch das Eingreifen des Befestigungsmittels einreißt, da der Bezug bei der Montage perforiert wird. EP 1 352 779 A1 offenbart eine Steuergriffanordnung zur Verwendung in einem mit Stoff bespannten Fahrzeugsitz.

Es war daher die Aufgabe der vorliegenden Erfindung eine Betätigungsvorrichtung anzugeben, bei dem die Montage eines Bowdenzuges mit einem Griffstück im Wesentlichen in einer Blindmontage erfolgen kann.

Gelöst wird die Aufgabe mit einer Betätigungsvorrichtung für ein Fahrzeug gemäß Anspruch 1. Durch die definierte Ausgangsposition des Endfittings ist es vorteilhaft möglich, das Griffstück auf der Blende zu montieren, wobei gleichzeitig der Endfitting mit dem Griffstück verbunden wird, ohne dass ein zusätzlicher Montageschritt erfolgt. Hierdurch wird die Montage der Betätigungsvorrichtung wesentliche unkomplizierter gestaltet und zudem wird die Montagezeit verkürzt. Eine Blindmontage zwischen Griffstück und Endfitting ist hierbei möglich.

Unter einer Blindmontage soll hierbei verstanden werden, wenn beim Einsetzen des Griffstücks in die Betätigungsvorrichtung im Wesentlichen gleichzeitig auch der Bowdenzug mit dem Griffstück verbunden wird, ohne dass in einem weiteren Montageschritt manuelle oder maschinell ein Kontakt zwischen den beiden Teilen hergestellt werden muss. Ein separater Montageschritt, indem der Bowdenzug mit dem Griffstück befestigt wird, entfällt hierbei.

Bei einer bevorzugten Ausführungsform der Erfindung weist das Basisteil einen ersten Kragen und die Blende einen zweiten Kragen auf. Bei der Montage der Blende mit dem Basisteil entsteht bevorzugt ein Klemmspalt, in dem ein Bezug während der Montage eingeklemmt wird. Der Bezug, der bevorzugt ein Sitzbezug eines Fahrzeugsitzes ist, wird hierdurch form- und/oder kraftschlüssig mit dem Basisteil und der Blende verbunden. Im Wesentlichen erfolgt die Befestigung des Bezuges hierbei entlang einer Fläche, wodurch bei mechanischen Belastungen die Kraft an dem Bezug nicht punktuell angreift, sondern sich entlang der Fläche verteilt. Ein mögliches Einreißen des Bezuges wird hierdurch vorgebeugt.

Bevorzugt weist das Basisteil eine Nase und der Bezug eine Lasche mit einem Schlitz auf. Bei der Montage wird bevorzugt die Lasche mit dem Schlitz zur Nase hin umgeschlagen und der Schlitz über die Nase gezogen. Hierdurch entsteht zusätzlich eine Fixierung des Bezuges, wodurch der Bezug form- und/oder kraftschlüssig mit dem Basisteil verbunden ist. Sowohl durch das Einklemmen des Bezuges entlang des Klemmspalts als auch durch die Verbindung des Schlitzes mit der Nase des Basisteils, wird eine Fixierung des Bezuges relativ zum Fahrzeugsitz erreicht. Die Fixierung ist form- und/oder kraftschlüssig, wobei der Bezug hierfür im Wesentlichen nicht speziell vorbereitet oder gefertigt werden muss.

Weiterhin bevorzugt ist das Führungselement als eine Führungsrippe ausgebildet. Die Führungsrippe weist dabei eine definierte Höhe und Breite auf, wobei die Breite und die Höhe von dem Endfitting des Bowdenzuges abhängig sind. Der Bowdenzug wird in das Basisteil montiert, bei einer Verdrehung des Bowdenzuges wird dieser durch die Führungsrippe in seine ursprüngliche Orientierung gedreht, bevor er auf dem Basisteil zu liegen kommt. Die genaue Wirkungsweise des Führungselements wird in der Figurenbeschreibung näher erklärt.

Bevorzugt weist das Griffstück eine Bowdenzugaufnahme auf und ist um eine Achse drehbar. Die Bowdenzugaufnahme wiederum weist bevorzugt einen Hinterschnitt und/oder eine Einbuchtung auf. Durch den Hinterschnitt und/oder die Einbuchtung wird der Endfitting des Bowdenzuges mit dem Griffstück verbunden. Bevorzugt gelangt dabei der Endfitting in die Einbuchtung, während das Griffstück auf die Blende montiert wird. Die Verbindung zwischen dem Endfitting und dem Griffstück ist dabei sehr robust und unkompliziert in der Fertigung. Bei einer Betätigung des Griffstücks dreht bevorzugt das Griffstück um die Achse und bewegt somit den Bowdenzug. Die genaue Funktionsweise wird in der Figurenbeschreibung erläutert.

Weiterhin bevorzugt weist die Blende ein Steckteil auf. Mit dem Steckteil wird die Blende in vorteilhafter Weise mit dem Basisteil bei der Montage verbunden. Durch die unkomplizierte Steckverbindung wird dabei weiterhin die Montagezeit herabgesetzt, da beispielsweise keine Schrauben angezogen oder Schweißnähte gebildet werden müssen.

Bevorzugt weist das Basisteil eine Kammer und/oder einen Rasthaken und/oder eine Rastnase und/oder eine Hülse auf. In die Kammer wird bevorzugt die Steckverbindung der Blende bei der Montage gesteckt. Durch den Rasthacken wird dabei eine form- und/oder kraftschlüssige Verbindung zwischen dem Steckteil der Blende und dem Rasthacken des Basisteils erreicht. Bei dem Einführen des Basisteils in eine Metallstruktur des Fahrzeugsitzes, verrastet die Rastnase mit der Metallstruktur. Hierdurch entsteht eine form- und/oder kraftschlüssige Verbindung zwischen der Metallstruktur und dem Basisteil. In der Hülse wird bevorzugt der Bowdenzug geführt, wobei der Endfitting in Richtung der Kammer liegt.

Besonders bevorzugt ist die Betätigungsvorrichtung in einem Fahrzeugsitz vorgesehen. Die Betätigungsvorrichtung dient hierbei bevorzugt als Auslöser, um einen Kraftfahrzeugsitz beispielsweise von einer Gebrauchsstellung in eine Nichtgebrauchsstellung zu verlagern. Eine solche Nichtgebrauchsstellung ist beispielsweise eine Easy-Entry-Stellung des Fahrzeugsitzes, bei der die Rückenlehne zum Sitzteil verklappt und der Fahrzeugsitz verfahren ist. Selbstverständlich ist die Betätigungsvorrichtung auch an anderen Stellen im Fahrzeug einsetzbar, bevorzugt jedoch zur Ent- oder Verriegelung von Elementen.

Weiterhin bevorzugt ist die Betätigungsvorrichtung zum Lösen eines Sitzverstellers vorgesehen. Hierbei wird durch die Betätigung des Griffstücks der Bowdenzug betätigt, der bevorzugt einen Recliner entriegelt und so die Verstellung des Fahrzeugsitzes ermöglicht.

Vier Verfahren zur Montage der Betätigungsvorrichtung und ein Verfahren zur Betätigung der Betätigungsvorrichtung sind ebenfalls Gegenstand der vorliegenden Erfindung.

Bei einem ersten Verfahren zur Montage der Betätigungsvorrichtung wird erfindungsgemäß das Basisteil mit der Hülse in eine Metallstruktur des Fahrzeugsitzes eingeführt. Die Rastnase an der Hülse verrastet dabei in der Metallstruktur des Fahrzeugsitzes, wodurch eine form- und/oder kraftschlüssige Verbindung zwischen dem Basisteil und der Metallstruktur und somit auch mit dem Fahrzeugsitz entsteht. Durch die Hülse des Basisteils wird mindestens ein Bowdenzug geführt, der in der Kammer des Basisteils mit seinem Endfitting zu liegen kommt.

Bei einem zweiten Verfahren zur Montage der Betätigungsvorrichtung wird erfindungsgemäß der Bezug über das Basisteil gezogen, wobei der Bezug eine Ausnehmung aufweist, die über der Kammer des Basisteils liegt. Die Lasche des Bezuges wird um den Innenumfang des ersten Kragens herumgeführt und mittels des Schlitzes auf die Nase des Basisteils geschoben. Der Sitzbezug ist somit formschlüssig mit dem Basisteil verbunden und in gewissem Umfang relativ zur Metallstruktur fixiert.

Bei einem dritten Verfahren zur Montage der Betätigungsvorrichtung wird erfindungsgemäß die Blende auf das Basisteil gesetzt, wobei das Steckteil der Blende in die Kammer des Basisteils eingeführt wird. Hierbei verrastet der Rasthaken des Basisteils mit dem Steckteil, wodurch eine form- und/oder kraftschlüssige Verbindung zwischen der Blende und dem Basisteil entsteht. Der erste Kragen des Basisteils und der zweite Kragen der Blende liegen aneinander, wobei zwischen dem ersten Kragen und dem zweiten Kragen ein Klemmspalt entsteht, entlang dem der Bezug festgeklemmt wird.

Bei einem vierten Verfahren zur Montage der Betätigungsvorrichtung wird erfindungsgemäß das Griffstück auf die Blende gesetzt, wobei der Endfitting des Bowdenzuges von dem Hinterschnitt des Griffstückes umgriffen wird und hierdurch von der Einbuchtung der Bowdenzugaufnahme und einer Rampe des Basisteils umschlossen wird. Eine extra Montageschritt, in dem der Endfitting mit der Bowdenzugaufnahme verbunden wird, ist nicht nötig.

Bei einem Verfahren zur Betätigung der Betätigungsvorrichtung wird bevorzugt das Griffstück mit einer Handhabe um die Achse verschwenkt, wobei hierbei der Endfitting, der sich in der Einbuchtung des Griffstücks befindet, entlang der Rampe geführt wird. Hierdurch wird bevorzugt die Seele des Bowdenzuges verschoben und ein Sitzversteller gelöst.

Die Erfindung und die bevorzugte Ausführungsform werden anhand von Figuren näher beschrieben. Die Beschreibungen sind dabei lediglich beispielhaft und schränken den allgemeinen Erfindungsgedanken nicht ein.
- **Figur 1**: stellt schematisch einen Fahrzeugsitz mit einer Betätigungsvorrichtung dar.
- **Figur 2**: stellt schematisch ein Basisteil, eine Blende und ein Griffstück dar.
- **Figur 3**: stellt schematisch das Basisteil mit der Blende dar.
- **Figur 4**: stellt schematisch einen Bezug dar.
- **Figur 5**: stellt schematisch die Betätigungsvorrichtung dar.
- **Figur 6**: stellt schematisch eine Aufsicht auf die Betätigungsvorrichtung dar.
- **Figur 7**: stellt das Basisteil mit einem Führungselement und einem Endfitting dar.

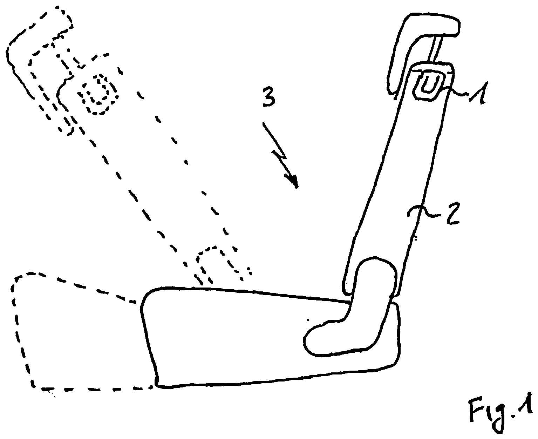

In der Figur 1 ist schematisch ein Fahrzeugsitz 3 mit einer Betätigungsvorrichtung 1 dargestellt. Hierbei ist die Betätigungsvorrichtung 1 seitlich im oberen Bereich einer Rückenlehne 2 eines Fahrzeugsitzes 3 angeordnet. Nach der manuellen Handhabung der Betätigungseinrichtung 1 kann der Fahrzeugsitz 3 aus einer Gebrauchsstellung nach vorne in eine gestrichelt dargestellte Nichtgebrauchsstellung verschoben werden, in der die Rückenlehne 2 zusätzlich in eine nach vorne geneigte Position verschwenkt ist.

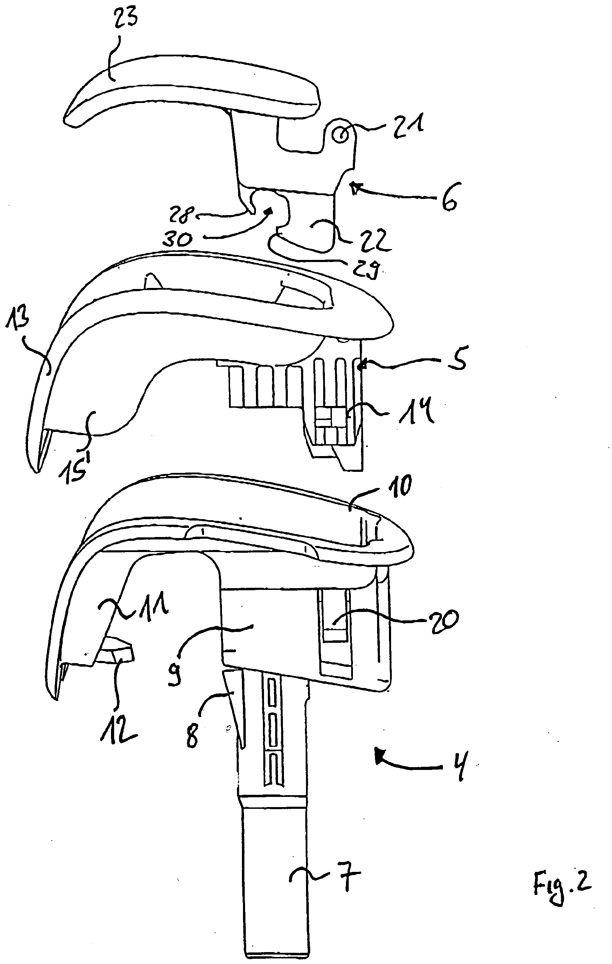

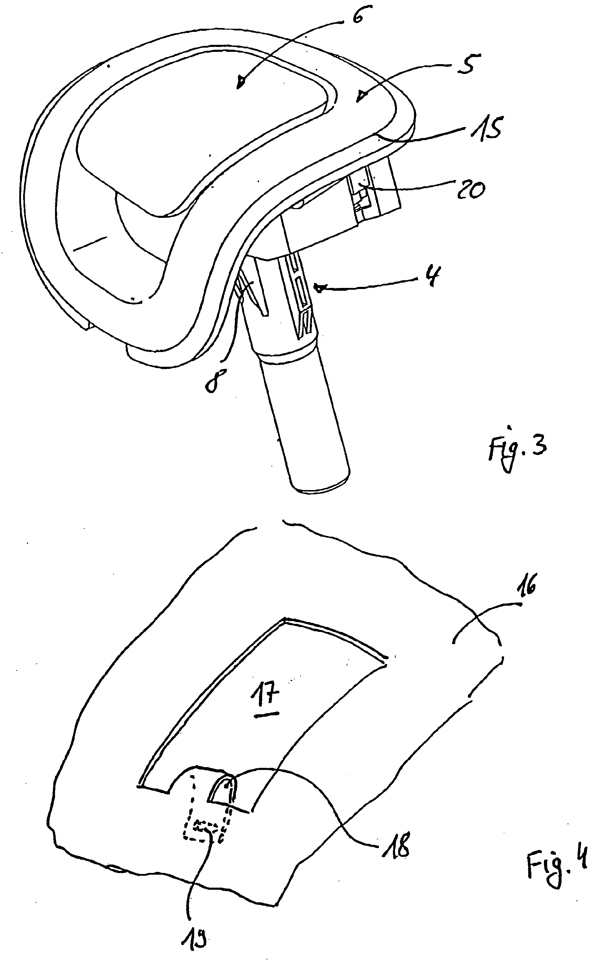

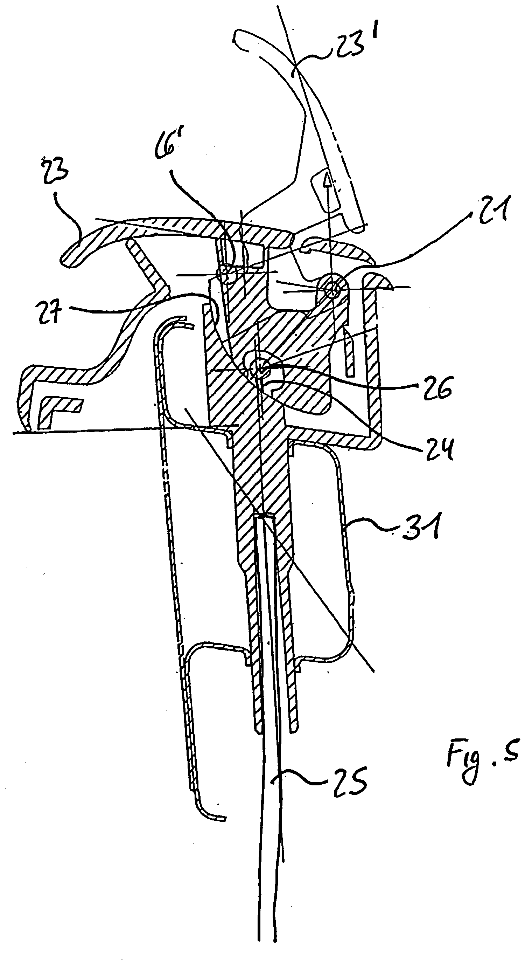

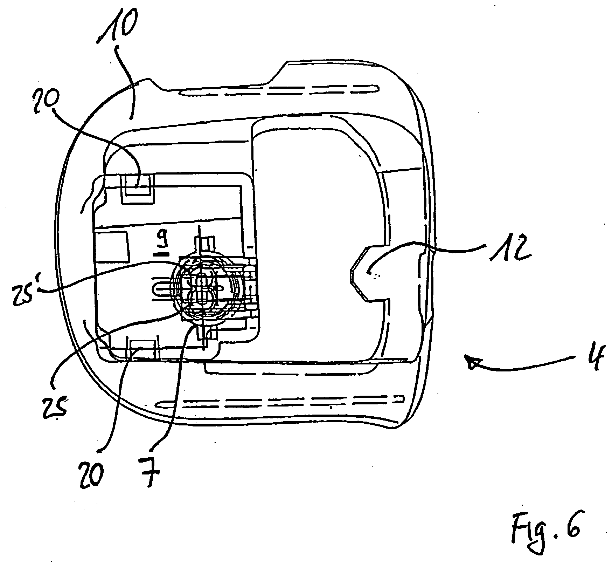

In der Figur 2 und der Figur 3 ist schematisch dargestellt, dass die Betätigungsvorrichtung 1 ein in die (nur in Fig. 5 dargestellte) Metallstruktur 31 der Rückenlehne 2 einsetzbares Basisteil 4, eine im Basisteil 4 verankerbare Blende 5 und ein in der Blende 5 drehbar angeordnetes Griffstück 6 umfasst, die vorzugsweise aus Kunststoff spritzgegossen werden. Das Basisteil 4 besteht aus einem im Einbauzustand nach unten durch die Metallstruktur 31 der Rückenlehne 2 ragenden Hülse 7, die mittels einer Rastnase 8 in einer Ausnehmung der Metallstruktur 31 verrastbar ist und durch welche ein oder mehrere zu den Sitzverstellern führende Bowdenzüge (in Fig. 5 und 6 mit Bezugszeichen 25 bzw. 25' versehen) in Richtung des Griffstücks 6 führbar sind. An den oberen Bereich der Hülse 7 schließt sich eine zur Hülse 7 hin offene Kammer 9 an, die an ihrer Oberkante einen ersten Kragen 10 aufweist. Der erste Kragen 10 ist ringartig ausgenommen und, in seitlicher Ansicht, ringförmig ausgebildet. Mit dieser ringförmigen Ausbildung umgreift das Basisteil 4 später den oberen und seitlichen Holm der Metallstruktur 31 der Rückenlehne 2. Vom Innenumfang des ersten Kragens 10 ragt ein stabilisierender Steg 11 zur Metallstruktur 31 hin, welcher am unteren Bereich des ersten Kragens 10 eine in Richtung der Kammer 9 herausragende Nase 12 ausbildet. Die Blende 5 weist ebenfalls einen ringförmigen umlaufenden zweiten Kragen 13 auf. An den zweiten Kragen 13 ist ein Steckteil 14 angeformt, welches in die Kammer 9 einführbar ist.

Das Steckteil 14 der Blende 5 ist ferner mit einer Griffmulde 15' ausgestattet, welche sich über den Winkel des zweiten Kragens 13 hinweg erstreckt. Die Kragen 10 und 13 sind im Wesentlichen deckungsgleich ausgebildet und liegen bei in das Basisteil 4 eingesetzter Blende 5 unter Ausbildung eines minimalen Klemmspalts 15 nahezu aneinander an.

In der Figur 4 ist schematisch der Bezug 16 dargestellt, der besonders bevorzugt ein Sitzbezug ist. Der Klemmspalt 15 fixiert den in Figur 4 isoliert dargestellten Bezug 16, der nach dem Einsetzen des Basisteils 4 beispielsweise über die Rückenlehne 2 gezogen wird. Der Bezug 16 weist eine etwa dem Innenumfang des ersten Kragens 10 entsprechende Ausnehmung 17 auf, in welche eine Lasche 18 des Bezugs 16 ragt. Die Lasche 18 wird um den Innenumfang des ersten Kragens 10 herumgeführt und mittels eines Schlitzes 19 auf die Nase 12 aufgeschoben. Der Bezug 16 ist damit bereits formschlüssig mit dem Basisteil 4 verbunden und damit auch in gewissem Umfang relativ zur Metallstruktur 31 der Rückenlehne 2 fixiert. Beim Einsetzen der Blende 5 in das Basisteil 4 wird diese durch im Basisteil 4 vorgesehene Rasthacken 20 in Position gehalten, wobei der Bezug 16 um die Ausnehmung 17 herum im Klemmspalt 15 kraftschlüssig und partiell durch Anlage an der Griffmulde 15' sowie dem Steckteil 14 auch formschlüssig gehalten wird.

Die Figur 5 stellt schematisch dar, dass das Griffstück 6 vormontiert mit der Blende 5 um eine Achse 21 schwenkbar angeordnet ist, wobei eine Bowdenzugaufnahme 22 in das kammerartig ausgebildete Steckteil 14 der Blende 5 hineinragt. Die Handhabe 23 des Griffstücks 6 verläuft in unbetätigtem Zustand etwa bündig zum oberen Bereich des zweiten Kragens 13, wobei der Bediener die Handhabe 23 von der Seite des zweiten Kragens 13 her im Bereich der Griffmulde 15' untergreifen kann. Wie weiterhin aus Figur 5 ersichtlich, liegt der tonnenförmige, an die Seele 24 des Bowdenzugs 25 angeformte Endfitting 26 parallel zur Achse 21 auf einer kreisbogenförmigen Rampe 27 auf, welche äquidistant zur Achse 21 verläuft. Beim Einsetzen von Blende 5 und Griffstück 6 wird der Endfitting 26 von einer mit Hinterschnitten 28, 29 versehenen Einbuchtung 30 der Bowdenzugaufnahme 22 umgriffen und ist nachfolgend von der Einbuchtung 30 und der Rampe 27 umschlossen. Beim Hochschwenken der Handhabe 23 wird der Endfitting 26 entlang der Rampe 27 nach oben geführt (in dieser Position als Handhabe 23' und Endfitting 26' bezeichnet). Hierdurch werden die Seele 24 im Bowdenzug 25 verschoben und ein Sitzversteller gelöst. Bei einer ersten Montage der Betätigungsvorrichtung 1 muss lediglich die Handhabe 23 auf die Blende 5 geklappt werden, bzw. das Griffstück 6 auf die Blende 5 montiert werden, damit der Endfitting 26 mit dem Griffstück 6 verbunden ist. Die Montage des Bowdenzuges 25 mit dem Griffstück 6 erfolgt folglich in einer Blindmontage. Ein separater Montageschritt, bei dem manuell oder maschinell eine Verbindung zwischen dem Griffstück 6 und dem Endfitting 26 hergestellt wird, ist nicht notwendig.

Wie schematisch aus der Aufsicht auf das Basisteil 4 nach Figur 6 ersichtlich, ist durch diese Ausbildung eine Doppelanordnung von Bowdenzügen 25, 25' betätigbar, die einen gemeinsamen Endfitting 26 aufweisen.

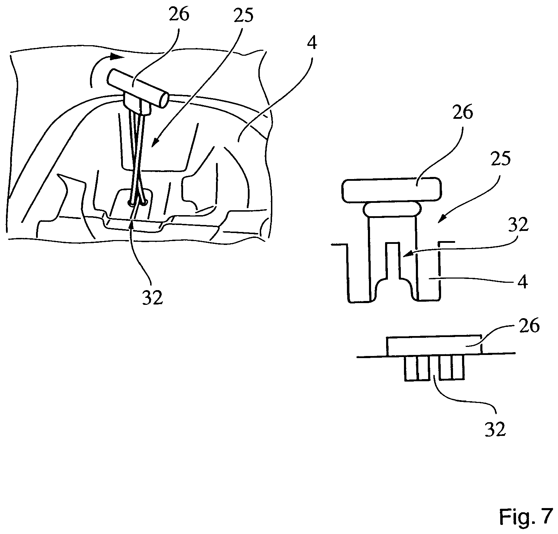

In der Figur 7 ist schematisch das Basisteil 4 mit dem Führungselement 32 dargestellt. Das Führungselement 32 befindet sich zwischen die Seele 24 des Bowdenzuges 25 und verhindert, dass sich der Endfitting 26 verdreht. Ist der Bowdenzug 25 verdreht, so bewirkt das Ziehen des Bowdenzuges 25 in Richtung des Führungselements 32, dass sich der Bowdenzug wieder in seine eigentliche Orientierung dreht. Eine richtige Position des Endfittings 26 ist im unteren Teil der Figur 7 dargestellt. Im Wesentlichen nur in dieser Position kann sich das Endfitting 26 auf Grund des Führungselements 32 an das Basisteil 4 anlagern. Das Führungselement 32 weist dabei eine definierte Höhe und Breite auf, die von dem Endfitting 26 und der Gestaltung des Basisteils 4 abhängt.

### Bezugszeichenliste

- 1: Betätigungsvorrichtung
- 2: Rückenlehne
- 3: Kraftfahrzeugsitz
- 4: Basisteil
- 5: Blende
- 6: Griffstück
- 7: Hülse
- 8: Rastnase
- 9: Kammer
- 10: erster Kragen (Basisteil)
- 11: Steg
- 12: Nase
- 13: zweiter Kragen (Blende)
- 14: Steckteil
- 15: Klemmspalt
- 15': Griffmulde
- 16: Bezug
- 17: Ausnehmung
- 18: Lasche
- 19: Schlitz
- 20: Rasthaken
- 21: Achse
- 22: Bowdenzugaufnahme
- 23, 23': Handhabe
- 24: Seele (des Bowdenzugs)
- 25: Bowdenzug
- 26, 26: Endfitting
- 27: Rampe
- 25 28, 29: Hinterschnitt
- 30: Einbuchtung
- 31: Metallstruktur

## Patentansprüche

1. Betätigungsvorrichtung (1) für ein Fahrzeug mit einem Basisteil (4), einer Blende (5), einem Griffstück (6) und einem Bowdenzug (25), wobei der Bowdenzug (25) ein Endfitting (26) aufweist, **dadurch gekennzeichnet, dass** das Basisteil (4) ein Führungselement (32) aufweist, das das Endfitting (26) des Bowdenzugs (25) in eine definierte Ausgangsposition für die Montage des Griffstücks (6) mit dem Endfitting (26) überführt.

2. Betätigungsvorrichtung (1) nach Anspruch 1 , **dadurch gekennzeichnet, dass** das Basisteil (4) einen ersten Kragen (10) und die Blende (5) einen zweiten Kragen (13) aufweist, wobei zwischen dem ersten Kragen (10) und dem zweiten Kragen (13) bei der Montage ein Klemmspalt (15) entsteht und im Klemmspalt (15) ein Bezug (16) eingeklemmt ist.

3. Betätigungsvorrichtung (1) nach Anspruch 2, **dadurch gekennzeichnet, dass** das Basisteil (4) eine Nase (12) und der Bezug (16) eine Lasche (18) mit einem Schlitz (19) aufweist und der Schlitz (19) mit der Nase (12) eine form- und/oder kraftschlüssige Verbindung eingeht.

4. Betätigungsvorrichtung (1) nach einem der vorhergehenden Ansprüche, **dadurch gekennzeichnet, dass** das Führungselement (32) eine Führungsrippe ist.

5. Betätigungsvorrichtung (1) nach einem der vorhergehenden Ansprüche, **dadurch gekennzeichnet, dass** das Griffstück (6) eine Bowdenzugaufnahme (22) mit einem Hinterschnitt (28, 29) und/oder einer Einbuchtung (30) aufweist und um eine Achse (21) schwenkbar ist.

6. Betätigungsvorrichtung (1) nach einem der vorhergehenden Ansprüche, **dadurch gekennzeichnet, dass** die Blende (5) ein Steckteil (14) aufweist.

7. Betätigungsvorrichtung (1) nach einem der vorhergehenden Ansprüche, **dadurch gekennzeichnet, dass** das Basisteil (4) eine Kammer (9) und/oder einen Rasthaken (20) und/oder eine Rastnase (8) und/oder eine Hülse (7) aufweist.

8. Betätigungsvorrichtung (1) nach einem der vorhergehenden Ansprüche, **dadurch gekennzeichnet, dass** sie in einem Fahrzeugsitz vorgesehen ist.

9. Betätigungsvorrichtung (1) nach einem der vorhergehenden Ansprüche, **dadurch gekennzeichnet, dass** sie zum Lösen eines Sitzverstellers vorgesehen ist.

10. Verfahren zur Montage der Betätigungsvorrichtung (1) nach einem der vorhergehenden Ansprüche 7-9, **dadurch gekennzeichnet, dass** das Basisteil (4) mit der Hülse (7) in eine Metallstruktur (31) eines Fahrzeuges eingeführt wird, wobei das Basisteil (4) mittels der Rastnase (8) mit der Metallstruktur (31) verrastet, wodurch eine form- und/oder kraftschlüssige Verbindung entsteht und wobei mindestens ein Bowdenzug (25) durch die Hülse (7) geführt wird.

11. Verfahren zur Montage der Betätigungsvorrichtung (1) nach einem der vorhergehenden Ansprüche 7-10, **dadurch gekennzeichnet, dass** der Bezug (16) über das Basisteil (4) gezogen wird, wobei der Bezug (16) eine Ausnehmung aufweist, die über der Kammer (9) des Basisteils (4) liegt und wobei die Lasche (18) des Bezuges (16) um den Innenumfang des ersten Kragens (10) herumgeführt wird und mittels des Schlitzes (19) auf die Nase (12) geschoben wird, wodurch eine formschlüssige Verbindung entsteht.

12. Verfahren zur Montage der Betätigungsvorrichtung (1) nach einem der vorhergehenden Ansprüche 7-11, **dadurch gekennzeichnet, dass** die Blende (5) auf das Basisteil (4) gesetzt wird, wobei das Steckteil (14) der Blende (5) in die Kammer (9) des Basisteils (4) eingeführt wird, wodurch einen form- und/oder kraftschlüssige Verbindung entsteht und wobei zwischen dem ersten Kragen (10) des Basisteils (4) und dem zweiten Kragen (13) der Blende (5) ein Klemmspalt (15) entsteht, indem der Bezug (16) festgeklemmt wird.

13. Verfahren zur Montage der Betätigungsvorrichtung (1) nach einem der vorhergehenden Ansprüche 5-12, **dadurch gekennzeichnet, dass** das Griffstück (6) auf die Blende (5) gesetzt wird, wobei der Endfitting (26) von dem Hinterschnitt (28, 29) des Griffstücks (6) umgriffen wird und hierdurch von der Einbuchtung (30) der Bowdenzugaufnahme (22) und einer Rampe (27) des Basisteils (4) umschlossen wird.

14. Verfahren zur Betätigung der Betätigungsvorrichtung (1) nach Anspruch 13, **dadurch gekennzeichnet, dass** beim Verschwenken des Griffstücks (6) um die Achse (21) der Endfitting (26) entlang der Rampe (27) geführt wird, wodurch eine Seele (24) des Bowdenzuges (25) verschoben wird.

## Claims

1. Actuator (1) for a vehicle, comprising a base (4), a covering element (5), a handle piece (6) and a Bowden cable (25), wherein the Bowden cable (25) has a terminal fitting (26), **characterized in that** the base (4) comprises a guiding element (32) that moves the terminal fitting (26) of the Bowden cable (25) into a defined initial position for assembling the handle piece (6) to the terminal fitting (26).

2. Actuator (1) according to Claim 1, **characterized in that** the base (4) comprises a first collar (10) and the covering element (5) comprises a second collar (13), a clamping gap (15) forming during the assembly between the first collar (10) and the second collar (13) and a cover (16) being clamped in the clamping gap (15).

3. Actuator (1) according to Claim 2, **characterized in that** the base (4) has a lug (12) and the cover (16) has a tab (18) with a slot (19), and the slot (19) enters into a form-fitting and/or frictional connection with the lug (12).

4. Actuator (1) according to one of the preceding claims, **characterized in that** the guiding element (32) is a guiding rib.

5. Actuator (1) according to one of the preceding claims, **characterized in that** the handle piece (6) has a Bowden cable holder (22) with an undercut (28, 29) and/or an indentation (30) and is pivotable about an axis (21).

6. Actuator (1) according to one of the preceding claims, **characterized in that** the covering element (5) has a plug-in part (14).

7. Actuator (1) according to one of the preceding claims, **characterized in that** the base (4) has a chamber (9) and/or a latching hook (20) and/or a latching lug (8) and/or a sleeve (7).

8. Actuator (1) according to one of the preceding claims, **characterized in that** it is provided in a vehicle seat.

9. Actuator (1) according to one of the preceding claims, **characterized in that** it is provided for releasing a seat adjuster.

10. Method for assembling the actuator (1) according to one of the preceding Claims 7-9, **characterized in that** the base (4) is introduced by means of the sleeve (7) into a metal structure (31) of a vehicle, the base (4) being latched to the metal structure (31) by means of the latching lug (8), thus producing a form-fitting and/or frictional connection, and at least one Bowden cable (25) being guided through the sleeve (7).

11. Method for assembling the actuator (1) according to one of the preceding Claims 7-10, **characterized in that** the cover (16) is pulled over the base (4), the cover (16) having a recess which lies above the chamber (9) of the base (4), and the tab (18) of the cover (16) being guided around the inner circumference of the first collar (10) and being pushed onto the lug (12) by means of the slot (19), thus producing a form-fitting connection.

12. Method for assembling the actuator (1) according to one of the preceding Claims 7-11, **characterized in that** the covering element (5) is placed onto the base (4), with the plug-in part (14) of the covering element (5) being introduced into the chamber (9) of the base (4), thus producing a form-fitting and/or frictional connection, and with a clamping gap (15) forming between the first collar (10) of the base (4) and the second collar (13) of the covering element (5), in which clamping gap the cover (16) is clamped.

13. Method for assembling the actuator (1) according to one of the preceding Claims 5-12, **characterized in that** the handle piece (6) is placed onto the covering element (5), the terminal fitting (26) being engaged around by the undercut (28, 29) of the handle piece (6) and thereby being enclosed by the indentation (30) of the Bowden cable holder (22) and a ramp (27) of the base (4).

14. Method for actuating the actuator (1) according to Claim 13, **characterized in that** the terminal fitting (26) is guided along the ramp (27) during the pivoting of the handle piece (6) about the axis (21), as a result of which a core (24) of the Bowden cable (25) is displaced.

## Revendications

1. Dispositif d'actionnement (1) pour un véhicule avec une partie de base (4), un obturateur (5), une poignée (6) et un câble Bowden (25), le câble Bowden (25) comportant un raccord d'extrémité (26), **caractérisé en ce que** la partie de base (4) comporte un élément de guidage (32) transformant le raccord d'extrémité (26) du câble Bowden (25) en une position de départ définie pour le montage de la poignée (6) avec un raccord d'extrémité (26).

2. Dispositif d'actionnement (1) selon la revendication 1, **caractérisé en ce que** la partie de base (4) comporte un premier col (10) et l'obturateur (5) comporte un deuxième col (13), un interstice de coincement (15) se produisant entre le premier col (10) et le deuxième col (13) lors du montage et une housse (16) étant coincée dans l'interstice de coincement (15).

3. Dispositif d'actionnement (1) selon la revendication 2, **caractérisé en ce que** la partie de base (4) comporte un bec (12) et que la housse (16) comporte une bride (18) avec une fente (19) et que la fente (19) avec le bec (12) forme une liaison réalisée par complémentarité de formes et/ou forces.

4. Dispositif d'actionnement (1) selon l'une quelconque des revendications précédentes, **caractérisé en ce que** l'élément de guidage (32) est une nervure de guidage.

5. Dispositif d'actionnement (1) selon l'une quelconque des revendications précédentes, **caractérisé en ce que** la poignée (6) comporte un logement de câble Bowden (22) avec un détouré arrière (28, 29) et/ou peut pivoter une anfractuosité (30) et autour d'un axe (21).

6. Dispositif d'actionnement (1) selon l'une quelconque des revendications précédentes, **caractérisé en ce que** l'obturateur (5) comporte une partie d'enfichage (14).

7. Dispositif d'actionnement (1) selon l'une quelconque des revendications précédentes, **caractérisé en ce que** la partie de base (4) comporte une chambre (9) et/ou un crochet d'encliquetage (20) et/ou un bec d'encliquetage (8) et/ou une douille (7).

8. Dispositif d'actionnement (1) selon l'une quelconque des revendications précédentes, **caractérisé en ce qu'**il est prévu dans un siège de véhicule.

9. Dispositif d'actionnement (1) selon l'une quelconque des revendications précédentes, **caractérisé en ce qu'**il est prévu pour déclencher un élément de réglage de siège.

10. Procédé de montage du dispositif d'actionnement (1) selon l'une quelconque des revendications 7 à 9, **caractérisé en ce que** la partie de base (4) est introduite avec la douille (7) dans une structure métallique (31) d'un véhicule, la partie de base (4) s'encliquetant, à l'aide du bec d'encliquetage (8), avec la structure métallique (31), permettant la création d'une liaison par complémentarité de formes et/ou de forces et au moins un câble Bowden (25) étant guidé à travers la douille (7).

11. Procédé de montage du dispositif d'actionnement (1) selon l'une quelconque des revendications 7 à 10, **caractérisé en ce que** la housse (16) est tirée sur la partie de base (4), la housse (16) comportant un évidement reposant au-dessus de la chambre (9) de la partie de base (4) et la bride (18) de la housse (16) étant guidée de façon circonférentielle autour de la périphérie intérieure du premier col (10) et étant poussée sur le bec (12) à l'aide de la fente (19), produisant une liaison réalisée par complémentarité de formes.

12. Procédé de montage du dispositif d'actionnement (1) selon l'une quelconque des revendications précédentes 7 à 11, **caractérisé en ce que** l'obturateur (5) est placé sur la partie de base (4), la partie d'enfichage (14) de l'obturateur (5) étant introduite dans la chambre (9) de la partie de base (4), produisant une liaison réalisée par complémentarité de formes et/ou de forces et un interstice de coincement (15) se produisant entre le premier col (10) de la partie de base (4) et le deuxième col (13) de l'obturateur (5), en coinçant fixement la housse (16).

13. Procédé de montage du dispositif d'actionnement (1) selon l'une quelconque des revendications précédentes 5 à 12, **caractérisé en ce que** la poignée (6) est placée sur l'obturateur (5), le raccord d'extrémité (26) étant entouré par le détouré arrière (28, 29) de la poignée (6) et étant ainsi entouré par l'anfractuosité (30) du logement de câble Bowden (22) et par une rampe (27) de la partie de base (4).

14. Procédé d'actionnement du dispositif d'actionnement (1) selon la revendication 13, **caractérisé en ce que** lors du pivotement de la poignée (6) autour de l'axe (21), le raccord d'extrémité (26) est guidé le long de la rampe (27), poussant une âme (24) du câble Bowden (25).
